# EUROPEAN PATENT APPLICATION

(11) **EP 1 489 781 A2**
(43) Date of publication of application: **22.12.2004**
(21) Application number: 04251041.2
(22) Date of filing: 25.02.2004
(51) Int. Cl.: H04L 12/413

(54) **Communication method capable of performing communication with a plurality of communication parties at high speed with reduced power consumption**

(30) Priority: 19.06.2003 JP 2003174749
(71) Applicant: Mitsumi Electric Co., Ltd., Tama-shi, Tokyo 206-8567 (JP)
(72) Inventor: Ono, Atsushi, Tama-Shi, Tokyo 206-8567 (JP)
(74) Representative: Rees, Alexander Ellison

(57) **Abstract**

A communication method of communicating with multiple communication apparatuses via a communication channel, the communication method including: a first step of determining a communication condition of the communication channel; a second step of causing a communication apparatus to wait for a predetermined waiting time and returning to the first step when the first step determines that the communication channel is being used; and a third step of performing communication via the communication channel when the first step determines that communication channel is not being used, wherein the communication apparatuses have respective different predetermined waiting times.

## Description

### BACKGROUND OF THE INVENTION

### 1. Field of the Invention

The present invention generally relates to communication methods, communication apparatuses, game systems using the communication apparatuses, and game controllers, and more particularly, to a communication method, a communication apparatus, a game system, and a game controller for communicating with a plurality of communication parties.

### 2. Description of the Related Art

Game machines, which are referred to as video game machines (TV game machines) or computer game machines, allow connection of multiple control pads thereto so that multiple persons can concurrently enjoy games.

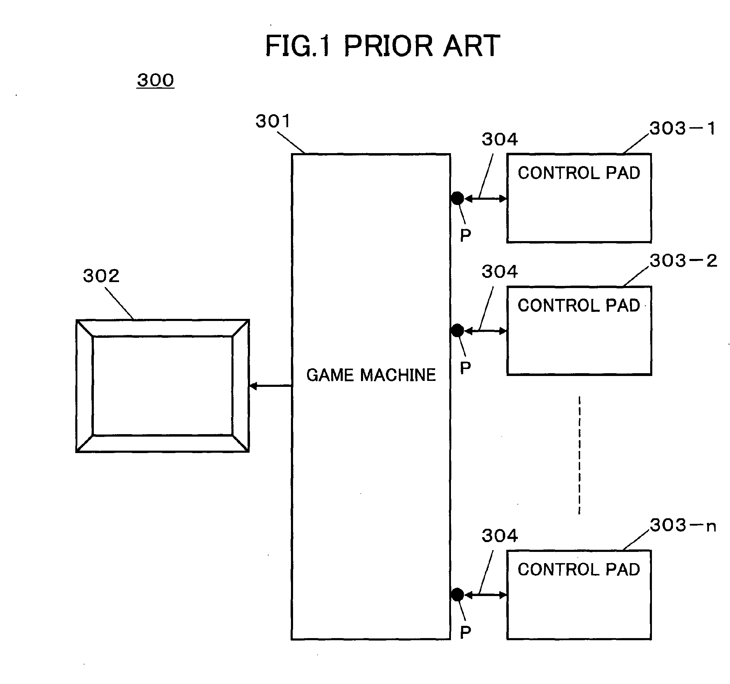

FIG. 1 is a system block diagram of a conventional game system 300.

The conventional game system 300 shown in FIG. 1 includes a game machine 301, a monitor 302, and control pads 303-1 through 303-n.

The game machine 301 incorporates a DVD drive therein. The game machine 301 drives a DVD storing a program by the incorporated DVD drive and executes the program, thereby processing a game. On this occasion, game screens are displayed on the monitor 302.

In addition, the game machine 301 is provided with multiple control ports P. By connecting the control pads 303-1 through 303-n to the control ports P via cables 304, it is possible for the control pads 303-1 through 303-n to control progress of a game.

With such a conventional game machine, however, since the control pads 303-1 through 303-n are connected via the cables 304, connection to the game machine 301 becomes complicated. Additionally, the lengths of the cables 304 limit the area where the control pads 303-1 through 303-n can be used.

Hence, there is a demand to perform wireless communications between the game machine 301 and the control pads 303-1 through 303-n. When performing wireless communication between the game machine 301 and the control pads 303-1 through 303-n, it is impossible to supply electric power to the control pads 303-1 through 303-n from the game machine 301 via the cables 304. Thus, it is necessary to drive the control pads 303-1 through 303-n by batteries. On the other hand, since high-speed response is required in controlling games, there is a demand for increasing the speed of communication.

Accordingly, when performing wireless communications between the game machine 301 and the control pads 303-1 through 303-n, though the control pads 303-1 through 303-n are driven by batteries, high-speed communication, which increases power consumption, is required. Thus, there are problems in that it is difficult to apply a wireless communication method to communications between the game machine 301 and the control pads 303-1 through 303-n, for example.

### SUMMARY OF THE INVENTION

A general object of the present invention is to provide an improved and useful communication method, communication apparatus, game system using the communication apparatus, and game controller in which one or more of the above-mentioned problems are eliminated.

A more specific object of the present invention is to provide a communication method, communication apparatus, game system using the communication apparatus, and game controller that can perform high-speed communication while reducing power consumption.

In order to achieve the above-mentioned objects, according to one aspect of the present invention, there is provided a communication method of communicating with a plurality of communication apparatuses via a communication channel, the communication method including:
a first step of determining a communication condition of the communication channel;
a second step of causing a communication apparatus to wait for a predetermined waiting time and returning to the first step when the first step determines that the communication channel is being used; and
a third step of performing communication via the communication channel when the first step determines that the communication channel is not being used,
wherein the communication apparatuses have different predetermined waiting times.

According to the present invention, a plurality of communication apparatuses have different predetermined waiting times. Hence, even if the communication apparatuses become competitive (compete for channel access) in communication, the timings of their next communications are shifted relative to each other. Thus, it is possible for the communication apparatuses to perform communication without competition and without waiting for a long time interval.

Other objects, features and advantages of the present invention will become more apparent from the following detailed description when read in conjunction with the following drawings.

### BRIEF DESCRIPTION OF THE DRAWINGS

FIG. 1 is a system block diagram of a conventional game system;
FIG. 2 is a system block diagram of a first embodiment of the present invention;
FIG. 3 is a block diagram of a game machine;
FIG. 4 is a block diagram of a communication apparatus;
FIG. 5 shows data of a table TB;
FIG. 6 is a block diagram of a control pad;
FIG. 7 is a flow chart for explaining a main process of the communication apparatus and control pads;
FIG. 8 is a flow chart for explaining a pairing process of the communication apparatus;
FIG. 9 is a flow chart for explaining a pairing process of the control pad;
FIG. 10 is a flow chart for explaining a communication process of the communication apparatus;
FIG. 11 is a flow chart for explaining a communication process of the control pad;
FIG. 12 is a timing chart for explaining an operation of the first embodiment of the present invention;
FIG. 13 is a system block diagram of a second embodiment of the present invention;
FIG. 14 is a block diagram of a communication apparatus that is a master apparatus;
FIG. 15 is a block diagram of a communication apparatus that is a slave apparatus; and
FIG. 16 is a system block diagram of a third embodiment of the present invention.

### DETAILED DESCRIPTION OF THE PREFERRED EMBODIMENTS

### (First Embodiment)

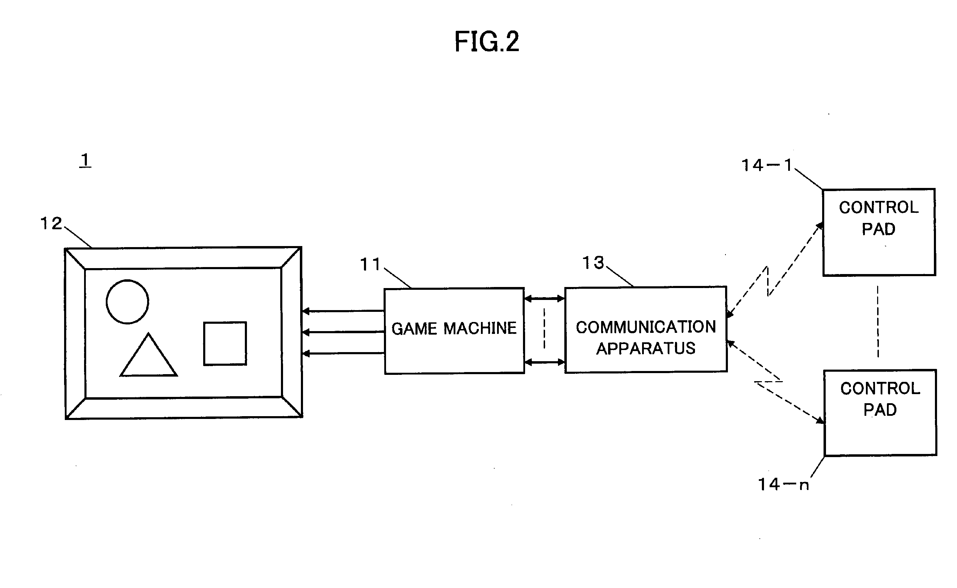

FIG. 2 is a block diagram of a system 1 according to a first embodiment of the present invention.

The system 1 of this embodiment includes a game machine 11, a TV monitor 12, a communication apparatus 13, and control pads 14-1 through 14-n.

The TV monitor 12 and the communication apparatus 13 are connected to the game machine 11. The TV monitor 12 displays screens of a game executed in the game machine 11. Two-way communications are performed between the communication apparatus 13 and the control pads 14-1 through 14-n by a 2.4 GHz band wireless communication method. The control pads 14-1 through 14-n create operational data in accordance with operations performed thereon. The operational data created in the control pads 14-1 through 14-n are transmitted to the communication apparatus 13 by the CAMA (carrier sense multiple access) method in the 2.4 GHz frequency band. The communication apparatus 13 identifies the operational data from the control pads 14-1 through 14-n and supplies the operational data to the respective ports of the game machine 11. The game machine 11 controls the progress of a game by controlling movements of characters, for example, corresponding to the respective ports based on the operational data supplied to the respective ports from the communication apparatus 13.

On this occasion, the game machine 11 generates feedback data in accordance with the progress of the game. The feedback data generated in the game machine 11 are supplied to the communication apparatus 13 from the respective ports. The communication apparatus 13 transmits the feedback data supplied from the respective ports of the game machine 11 to the control pads 14-1 through 14-n according to the CAMA method by using the 2.4 GHz band. The control pads 14-1 through 14-n generate vibration or sound in accordance with the feedback data that are transmitted from the communication apparatus 13 by wireless.

Next, a description is given below of a configuration of the game machine 11.

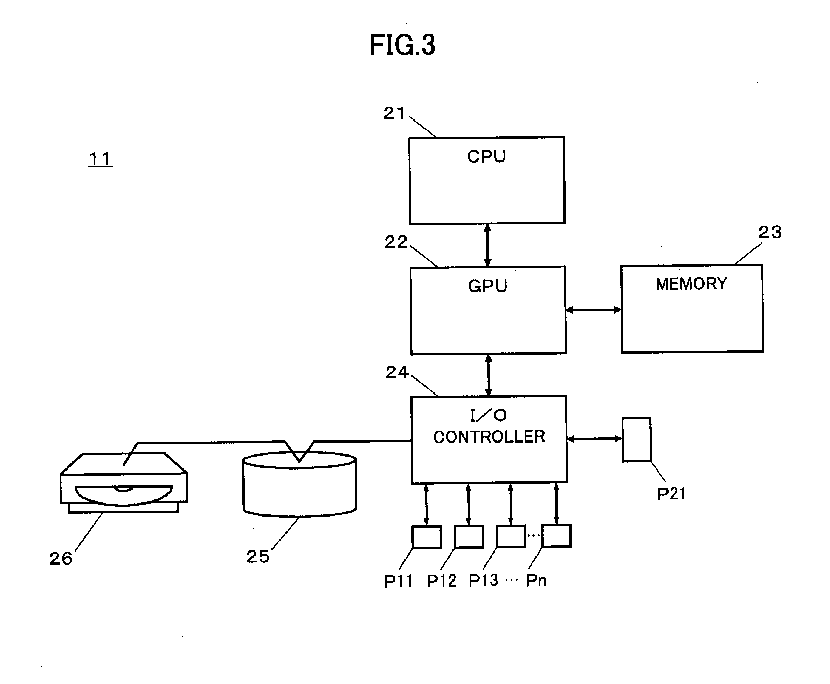

FIG. 3 is a block diagram of the game machine 11.

The game machine 11 includes a CPU (central processing unit) 21, a GPU (graphic processing unit) 22, a memory 23, an I/O controller 24, a hard disk drive 25, a DVD-ROM drive 26, USB ports P11 through Pn, and a communication port P21 for communication with, for example, a LAN (local area network).

The CPU 21 performs data processing and executes processes for games based on a DVD-ROM placed in the DVD-ROM drive 26 or a program installed in the hard disk drive 25.

The GPU 22 incorporates a memory controller. The GPU 22 is a unit that performs data communication with the memory 23 and uses the memory 23 as a working storage area so as to perform a complex graphic process of a game, for example.

The I/O controller 24 incorporates interfaces for connecting the hard disk 25 and the DVD-ROM drive 26 thereto, a USB interface for communicating with the USB ports P11 through Pn (n: natural number), and a communication interface for communicating with the LAN via the communication port P21. Input and output of data are performed via the I/O controller 24.

The communication apparatus 13 is connected to the USB ports P11 through Pn of the game machine 11.

Next, a description is given below of a configuration of the communication apparatus 13.

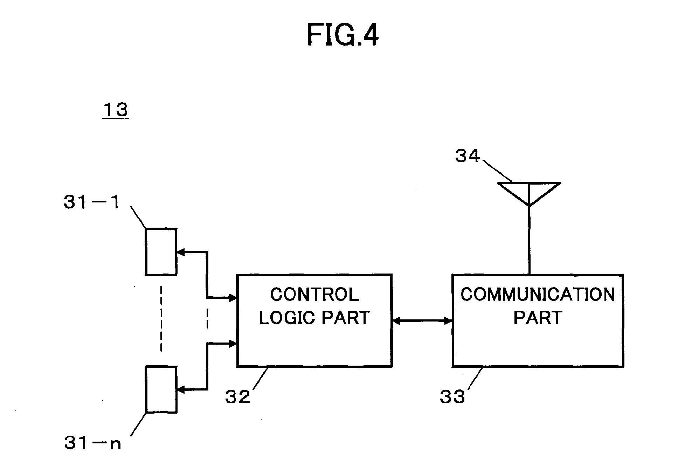

FIG. 4 is a block diagram of the communication apparatus 13.

The communication apparatus 13 includes USB ports 31-1 through 31-n, a control logic part 32, a communication part 33, and an antenna 34. The USB ports 31-1 through 31-n are connected to the USB ports P11 through Pn, respectively, of the game machine 11.

The USB ports 31-1 through 31-n are connected to the control logic part 32. The control logic part 32 performs communication control and associates the control pads 14-1 through 14-n with the USB ports 31-1 through 31-n, respectively. When associating the control pads 14-1 through 14-n with the USB ports 31-1 through 31-n, a table TB is used, for example.

Next, a description is given below of the table TB.

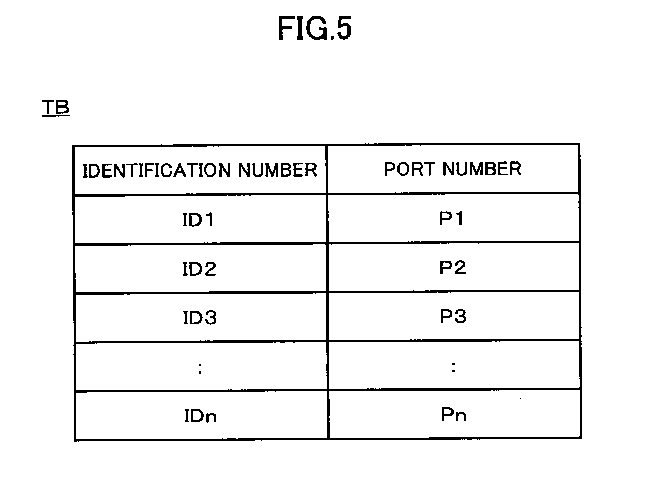

FIG. 5 is a table showing data of the table TB.

The table TB stores identification numbers ID1 through IDn and port numbers P1 through Pn of the USB ports 31-1 through 31-n in an associated manner.

For example, transmission data supplied to a USB port 31-i is supplied to the control logic part 32. The control logic part 32 refers to the table TB based on a port number Pi of the USB port 31-i to which the transmission data are supplied, obtains the corresponding identification number IDi, and attaches the obtained identification number IDi to the transmission data. The transmission data to which the identification number IDi is attached are supplied to the communication part 33. The communication part 33 modulates a 2.4 GHz carrier wave with the transmission data from the control logic part 32 and emits the modulated carrier wave from the antenna 34 as a radio wave.

Additionally, the communication part 33 demodulates a 2.4 GHz signal among signals received by the antenna 34, and supplies the demodulated signal to the control logic part 32. The control logic part 32 analyzes data received from the communication part 33, and detects an identification number IDj attached by a control pad 14-j, which is a transmitting source. By referring to the table TB, based on the detected identification number IDj, the control logic part 32 obtains a port number Pj of a USB port 31-j to which the data are to be output. Then, the control logic part 32 transmits the received data from the USB port 31-j corresponding to the obtained port number Pj.

A description is given below of a configuration of a control pad 14-i, which is one of the control pads 14-1 through 14-n.

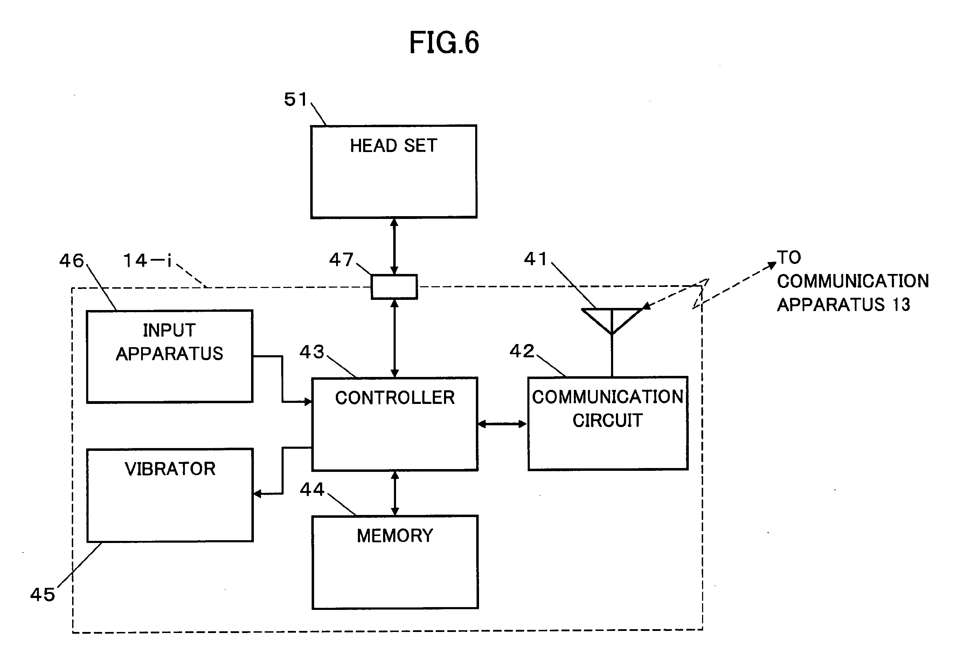

FIG. 6 is a block diagram of the control pad 14-i.

The control pad 14-i includes an antenna 41, a communication circuit 42, a controller 43, a memory 44, a vibrator 45, an input apparatus 46, and an input/output port 47.

Transmission data from the communication apparatus 13 are received by the antenna 41 and supplied to the communication circuit 42. The communication circuit 42 extracts and demodulates a 2.4 GHz signal among radio waves received by the antenna 41 and supplies the demodulated signal to the controller 43.

The controller 43 analyzes the received demodulated data and detects an identification number ID. When the detected identification number ID is the identification number that is set in advance to the control pad 14-i per se, the controller 43 controls the vibrator 45 or outputs a drive signal to the input/output port 47 based on the received data.

Additionally, when data are input from the input apparatus 46, the controller 43 attaches the identification number ID of the control pad 14-i per se to the input data and supplies the input data to the communication circuit 42. The communication circuit 42 modulates a 2.4 GHz carrier wave with the data from the controller 43 and emits the modulated carrier wave from the antenna 41.

The memory 44 is used as a working storage area of the controller 43.

On this occasion, in this embodiment, communications are controlled such that radio waves transmitted from the communication apparatus 13 and the control pads 14-1 through 14-n do not overlap each other.

A description is given below of a control operation for preventing radio waves transmitted from the communication apparatus 13 and the control pads 14-1 through 14-n from overlapping each other.

First, a description is given below of a main process in the communication apparatus 13 and the control pads 14-1 through 14-n.

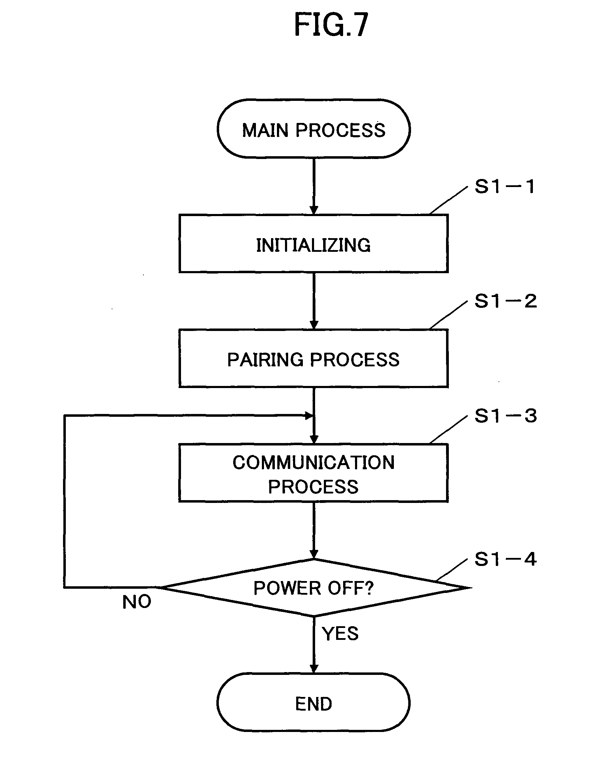

FIG. 7 is a flow chart for explaining the main process in the communication apparatus 13 and the control pads 14-1 through 14-n.

When application of power is detected in the communication apparatus 13 and the control pads 14-1 through 14-n, incorporated CPUs, for example, are initialized by a reset signal in step S1-1. In step S1-2, a pairing process for communication is carried out.

Here, a description is given below of the pairing process in the communication apparatus 13.

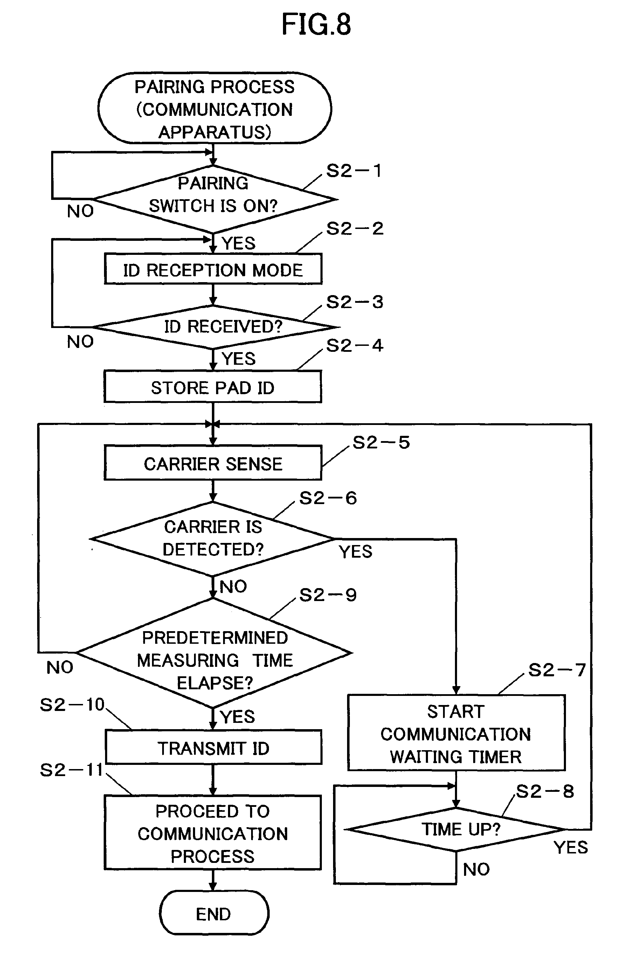

FIG. 8 is a flow chart for explaining the pairing process in the communication apparatus 13.

In step S2-1, it is determined whether a pairing switch is turned ON. Step S2-1 is repeated until the decision result in step S2-1 becomes YES. When it is determined that the pairing switch is turned ON in step S2-1 (YES in step S2-1), the communication apparatus 13 is shifted to an ID reception mode in step S2-2. The ID reception mode is an operation mode for receiving identification number IDs from the control pads 14-1 through 14-n.

Step S2-3 determines whether an identification number ID is received. When the decision result in step S2-3 is NO, the process returns to step S2-2. When an identification number ID is received from the control pad 14-i (YES in step S2-3), the communication apparatus 13 stores the received identification number ID in an internal memory in step S2-4. Then, the communication apparatus 13 performs a process for confirming the communication condition of a communication channel.

First, in step S2-5, the communication apparatus 13 detects whether there is a carrier frequency on the communication channel, i.e., performs carrier sensing. Carrier sensing is performed for a 2.4 GHz signal in signals received by the antenna 34.

In step S2-6, whether a carrier is detected is determined. When a carrier is detected in step S2-6 (YES in step S2-6), the communication apparatus 13 determines that the communication channel is being used, and starts a communication waiting timer in step S2-7. In step S2-8, whether the communication waiting timer time is up is determined. Step S2-8 is repeated until the decision result in step S2-8 becomes YES. When the communication waiting timer time is up (YES in step S2-8), the process returns to step S2-5 and carrier sensing is performed again. It should be noted that the waiting time of the communication waiting timer is set to be different from communication waiting times that are set for the control pads 14-1 through 14-n.

When a carrier is not detected in step S2-6 (NO in step S2-6), it is determined in step S2-9 whether a predetermined measuring time has elapsed. When a carrier is not detected for the predetermined measuring time (YES in step S2-9), the process proceeds to step S2-10. In step S2-10, the identification number ID of the control pad 14-i stored in step S2-4 is added to the identification number ID that is set in advance for identifying the communication apparatus 13, and the identification number ID is transmitted. In step S2-11, the process proceeds to a communication process in which communications with the control pads 14-1 through 14-n are performed.

In the aforementioned manner, the pairing process with respect to the control pad 14-i in the communication apparatus 13 ends.

Next, a description is given below of a pairing process in the control pad 14-i.

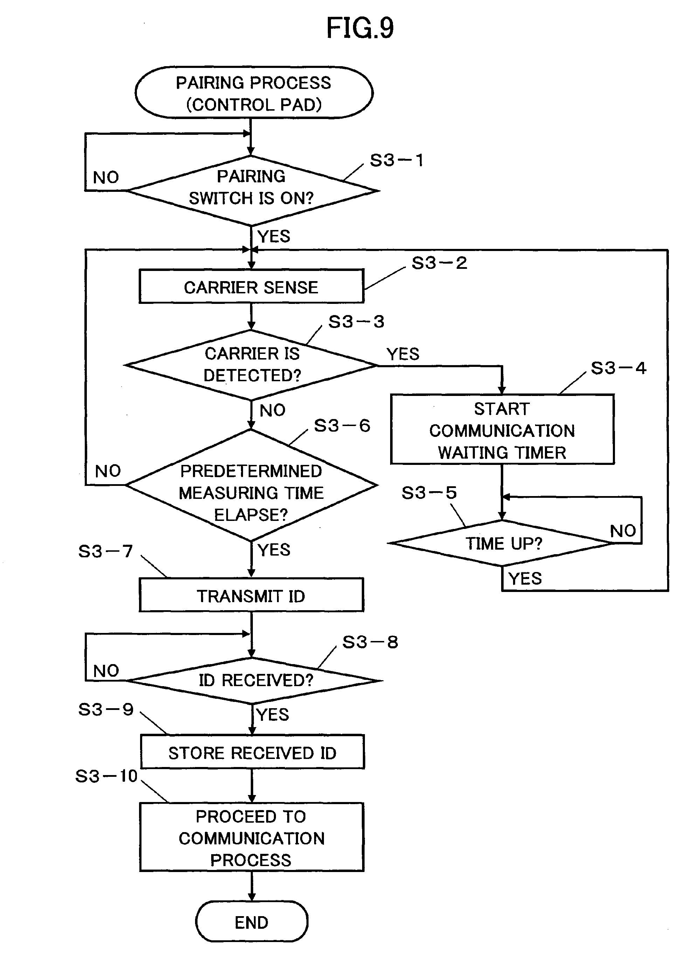

FIG. 9 is a flow chart for explaining a pairing process in the control pad 14-i.

In step S3-1, it is determined whether the pairing switch is turned ON. Step S3-1 is repeated until the decision result in step S3-1 becomes YES. When it is determined that the pairing switch is turned ON (YES in step S3-1), in order to confirm the use condition of the communication channel, first, carrier sensing is started by the control pad 14-i in step S3-2. In step S3-3, it is determined whether a carrier is detected. When the control pad 14-i determines that, as a result of carrier sensing, a carrier is detected and the communication channel is being used (YES in step S3-3), the control pad 14-i starts a communication waiting timer in step S3-4. In step S3-5, whether the communication waiting timer time is up is determined. Step S3-5 is repeated until the decision result in step S3-5 becomes YES. When the communication waiting timer time is up (YES in step S3-5), the process returns to step S3-2, and carrier sensing is performed again. The measuring time of the communication waiting timer of the control pad 14-i is set to be different from those of the communication apparatus 13 and the other control pads.

When a carrier is not detected (NO in step S3-3), whether a predetermined measuring time has elapsed is determined in step S3-6. When a carrier is not detected for the predetermined measuring time (YES in step S3-6), the process proceeds to step S3-7. In step S3-7, the identification number IDi that is set in advance for the control pad 14-i is transmitted. In step S3-8, it is determined whether an identification number IDO of the communication apparatus 13 is received from the communication apparatus 13. Step S3-8 is repeated until the decision result in step S3-8 becomes YES. When the control pad 14-i receives the identification number IDO of the communication apparatus 13 from the communication apparatus 13 (YES in step S3-8), the process proceeds to step S3-9. In step S3-9, the control pad 14-i stores in an internal memory the identification number ID0 of the communication apparatus 13 received in step S3-8. Then, in step S3-10, the process proceeds to a communication process for performing normal data communications with the communication apparatus 13.

In the aforementioned manner, the pairing process with respect to the communication apparatus 13 in the control pad 14-i ends.

By the above-mentioned pairing processes of the control pad 14-i and the communication apparatus 13, the control pad 14-i and the communication apparatus 13 can recognize the mutual identification number IDs. Thus, it is possible to perform data communications.

Next, a description is given below of communication processes of the communication apparatus 13 and the control pad 14-i. First, the communication process of the communication apparatus 13 is described.

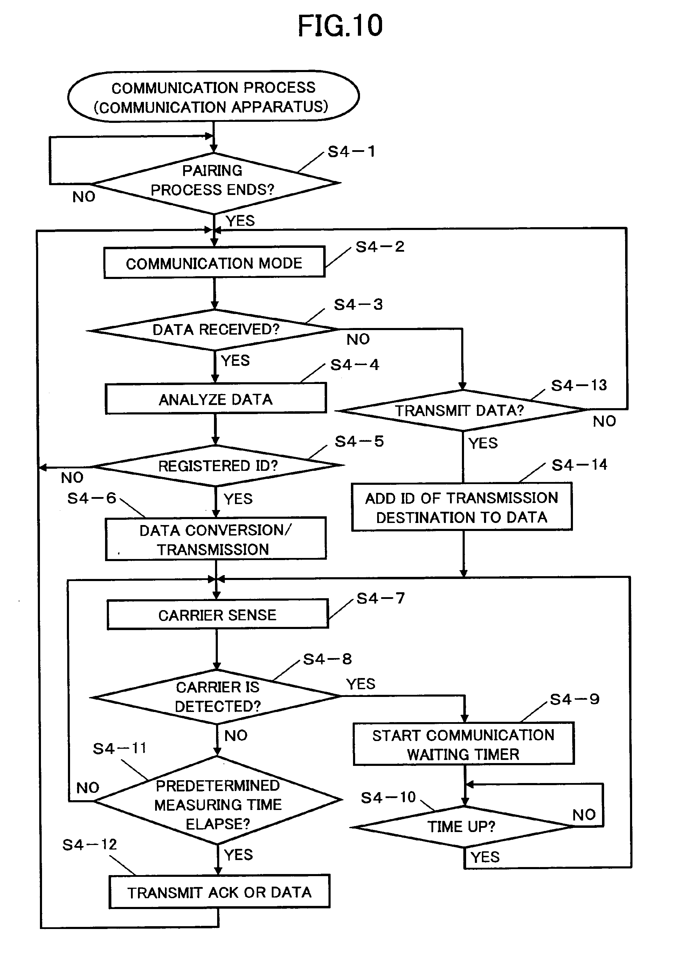

FIG. 10 is a flow chart for explaining the communication process of the communication apparatus 13.

In step S4-1, it is determined whether the pairing process ends. Step S4-1 is repeated until the decision result in step S4-1 becomes YES. When it is determined that the pairing process ends (YES in step S4-1), the process proceeds to a communication mode in step S4-2. In step S4-3, it is determined whether a 2.4 GHz signal is received. When it is determined that the communication apparatus 13 receives a 2.4 GHz signal (YES in step S4-3), the communication apparatus 13 analyzes data of the received signal in step S4-4. In step S4-5, the communication apparatus 13 determines whether the identification number IDi added to the data is already registered. When the identification number IDi is already registered (YES in step S4-5), the process proceeds to step S4-6. In step S4-6, the communication apparatus 13 converts the received data, obtains a corresponding port number Pi by referring to the table TB, and outputs the converted received data from a USB port 31-i corresponding to the obtained port number Pi.

Then, in order to detect the use condition of the communication channel, the communication apparatus 13 performs carrier sensing in step S4-7. In step S4-8, whether a carrier is detected is determined. When a carrier is detected in step S4-8 (YES in step S4-8), it is possible to determine that the communication channel is being used. Thus, the communication waiting timer is started in step S4-9. In step S4-10, whether the communication waiting timer time is up is determined. Step S4-10 is repeated until the decision result in step S4-10 becomes YES. When the communication waiting timer time is up (YES in step S4-10), the process returns to step S4-7, and carrier sensing is started again.

When a carrier is not detected in step S4-8 (NO in step S4-8), it is determined in step S4-11 whether a predetermined measuring time has elapsed. When the decision result in step S4-11 is NO, the process returns to step S4-7. When a carrier is not detected for the predetermined measuring time (YES in step S4-11), the communication apparatus 13 determines that the communication channel is open. Thus, in step S4-12, the communication apparatus 13 transmits an acknowledgement (ACK) to the control pad 14-i.

When the decision result in step S4-3 is NO, the process proceeds to step S4-13. In step S4-13, whether data are to be transmitted is determined. When transmitting data to the control pad 14-i (YES in step S4-13), the process proceeds to step S4-14. In step S4-14, the communication apparatus 13 refers to the table TB by the port number Pi of the USB port 31-i to which the data are input, and obtains and adds to data the identification number IDi of a transmission destination. Then, the communication apparatus 13 performs steps S4-7 through S4-11 so as to confirm that the communication channel is not being used. Thereafter, in step S4-12, the communication apparatus 13 transmits the data to the control pad 14-i.

A description is given below of the communication process of the control pad 14-i.

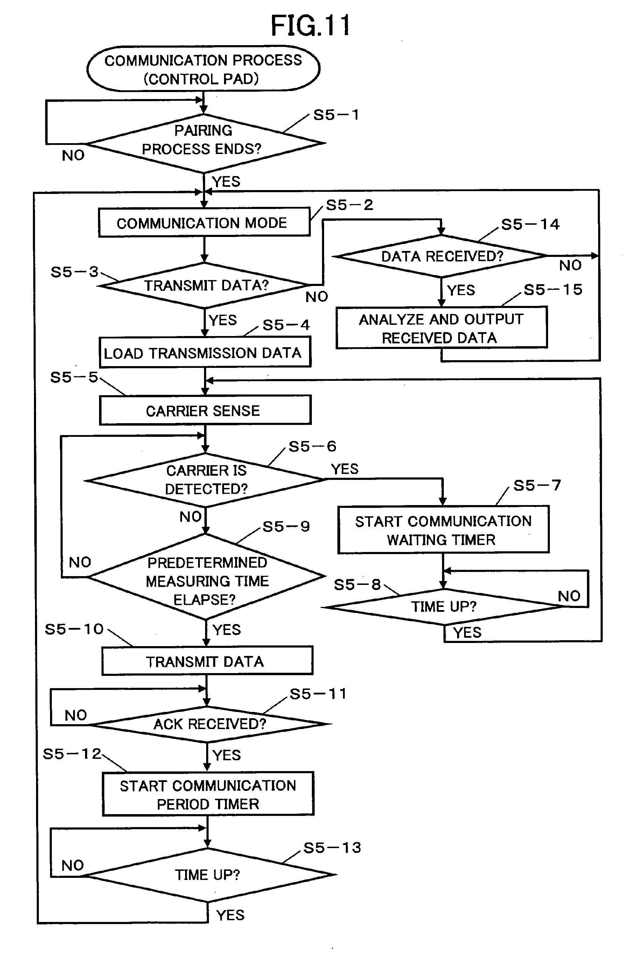

FIG. 11 is a flow chart for explaining the communication process of the control pad 14-i.

In step S5-1, it is determined whether the pairing process ends. Step S5-1 is repeated until the decision result in step S5-1 becomes YES. When it is determined that the pairing process ends (YES in step S5-1), the process proceeds to a communication mode in step S5-2. When, in step S5-3, the control pad 14-i transmits data to the communication apparatus 13 in accordance with an operation performed on the input apparatus 46 (YES in step S5-3), the control pad 14-i loads transmission data in step S5-4. In step S5-5, the control pad 14-i performs carrier sensing so as to confirm the use condition of the communication channel.

In step S5-6, whether a carrier is detected is determined. When the control pad 14-i detects a carrier and determines that the communication channel is being used (YES in step S5-6), the control pad 14-i starts the communication waiting timer in step S5-7. In step S5-8, whether the communication waiting timer time is up is determined. Step S5-8 is repeated until the decision result in step S5-8 becomes YES. When the communication waiting timer time is up (YES in step S5-8), the process returns to step S5-5, and the control pad 14-i starts carrier sensing again.

When the decision result in step S5-6 is NO, it is determined in step S5-9 whether a predetermined measuring time has elapsed. When the decision result in step S5-9 is NO, the process returns to step S5-6. When a carrier is not detected for the predetermined measuring time (YES in step S5-9), the control pad 14-i determines that the communication channel is not being used. Thus, in step S5-10, the control pad 14-i transmits data to the communication apparatus 13.

In step 5-11, whether an acknowledgement (ACK) is received is determined. Step S5-11 is repeated until the decision result in step S5-11 becomes YES. When the control pad 14-i receives from the communication apparatus 13 an acknowledgement (ACK) in response to the transmission data (YES in step S5-11), the process proceeds to step S5-12. In step S5-12, a communication period timer is started. In step S5-13, whether the communication period timer time is up is determined. Step S5-13 is repeated until the decision result in step S5-13 becomes YES. When the communication period timer time is up (YES in step S5-13), the process returns to step S5-2, and the communication mode is continued.

When the decision result in step S5-3 is NO, the process proceeds to step S5-14. In step S5-14, it is determined whether data are received. When the control pad 14-i receives data via the communication channel (YES in step S5-14), the process proceeds to step S5-15. In step S5-15, the control pad 14-i analyzes the received data, determines whether the received data are for the control pad 14-i based on the identification number ID added to the received data, and drives the vibrator 45 or a head set 51 connected to the input/output port 47 in accordance with the received data.

In the aforementioned manner, two-way communication is performed between the communication apparatus 13 and the control pad 14-i.

According to this embodiment, it is possible to perform communication with the minimum waiting time by setting in advance different set times to the communication waiting timers incorporated in the communication apparatus 13 and the control pads 14-1 through 14-n.

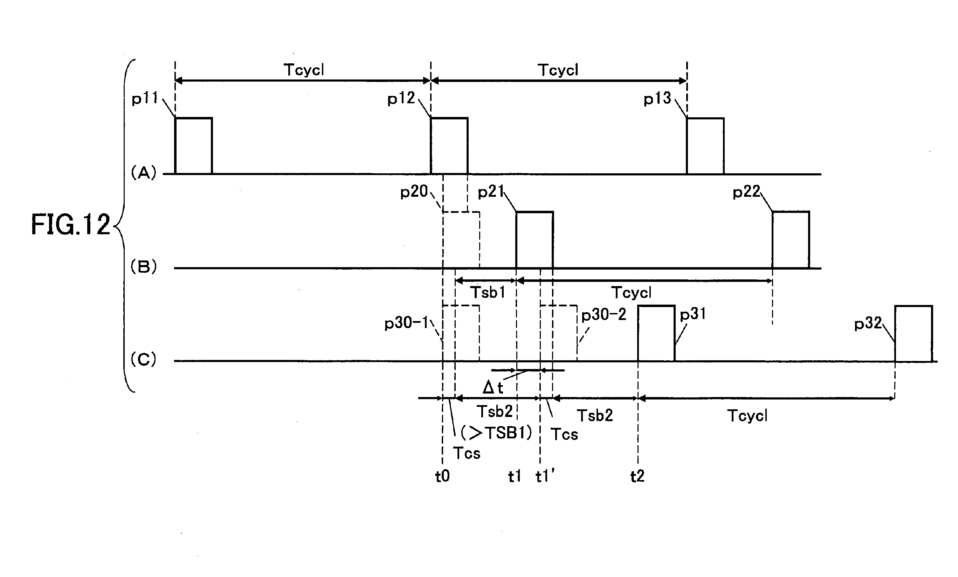

FIG. 12 is a timing chart for explaining an operation according to the first embodiment of the present invention. FIG. 12-(A) shows an operation of the control pad 14-1, FIG. 12-(B) shows an operation of the control pad 14-2, and FIG. 12-(C) shows the control pad 14-3.

As shown in FIG. 12-(A), the control pad 14-1 performs communication in a predetermined communication period Tcycl. Here, it is assumed that, at a time t0 when the control pad 14-1 is transmitting a communication packet p12, a transmission request is issued to the control pad 14-2 to transmit a packet p20 as indicated by broken lines in FIG. 12-(B), and a transmission request is issued to the control pad 14-3 to transmit a packet p30-1 as indicated by broken lines in FIG. 12-(C). In the control pads 14-2 and 14-3, a carrier is detected for a predetermined measuring time Tcs since the time t0. On this occasion, as shown in FIG. 12-(A), the control pad 14-1 is performing communication. Thus, a carrier is detected in the control pads 14-2 and 14-3.

When a carrier is detected at the time t0, the control pad 14-2 waits for a communication waiting time Tsbl as shown by FIG. 12-(B). Thereafter, at a time t1, carrier sensing is performed again. On this occasion, as shown in FIG. 12-(A) and FIG. 12-(C), the control pads 14-1 and 14-3 are not performing communication. Thus, the communication channel is open. Accordingly, a communication packet p21 is transmitted by the control pad 14-2. In the aforementioned manner, it is possible to perform communications after the elapse of the communication waiting time Tsb1, which is a short time interval. Hence, it is possible to control a game at high speed.

When a carrier is detected at the time t0, the control pad 14-3 waits for a communication waiting time Tsb2 as shown in FIG. 12-(C). Thereafter, at a time t1', a transmission request is issued in the control pad 14-3 to transmit a packet p30-2, and a carrier is detected again. The communication waiting time Tsb2 is set longer than the communication waiting time Tsb1 of the control pad 14-2 by Δt. Thus, as shown in FIG. 12-(B), at the time t1', the control pad 14-2 is already performing communications. Thus, the control pad 14-3 waits for the communication waiting time Tsb2 again. At a time t2, the control pad 14-3 performs carrier sensing again. At the time t2, the control pads 14-1 and 14-2 are not performing communications as shown in FIG. 12-(A) and FIG. 12-(B), respectively. Thus, the communication channel is open. Accordingly, a communication packet p31 is transmitted by the control pad 14-3. The communication waiting time Tsb2 is set longer than the communication waiting time Tsb1 by Δt1 (Tsb1 < Tsb2). Hence, the timing of a transmission request of the control pad 14-2 and that of the control pad 14-3 do not match and respective transmission requests are issued with a time lag. Accordingly, even if the timings of respective transmission requests match, it is possible to positively perform data transmission in a short time interval.

A description is given below of the internal structure of a packet.

The communication period Tcycl is unfixed and set to about 16 ms. The measuring time Tcs for detecting a carrier is set to the first 100-200 *µ* sec of the communication period Tcycl. A communication interval is set for about 1112 *µ* sec immediately after the measuring time Tcs. In the communication interval, the first 108 *µ* sec is used for a 12-byte polling packet, and data are inserted in the rest of the communication interval.

It should be noted that the above-mentioned internal structure of a packet is an example and not a limitation.

According to this embodiment, in the so-called CAMA (carrier sense multiple access) communication, it is possible to prevent simultaneous communications by setting different communication waiting times for the communication apparatus 13 and the control pads 14-1 through 14-n. Also, it is possible to minimize the waiting times. Further, since it is unnecessary to continuously supply power to a high frequency communication circuit that performs communication in a 2.4 GHz band, it is possible to reduce power consumption.

In this embodiment, the description is given by taking the 2.4 GHz wireless communication method as an example. However, application of the present invention is not limited to wireless communication methods. The present invention may also be applied to wire communication methods in which communication is performed by using an identical communication channel and a common carrier frequency.

Additionally, in this embodiment, one communication apparatus 13 is provided for the game machine 11. However, the communication apparatus 13 may be provided for each of the USB ports P11 through Pn.

### (Second Embodiment)

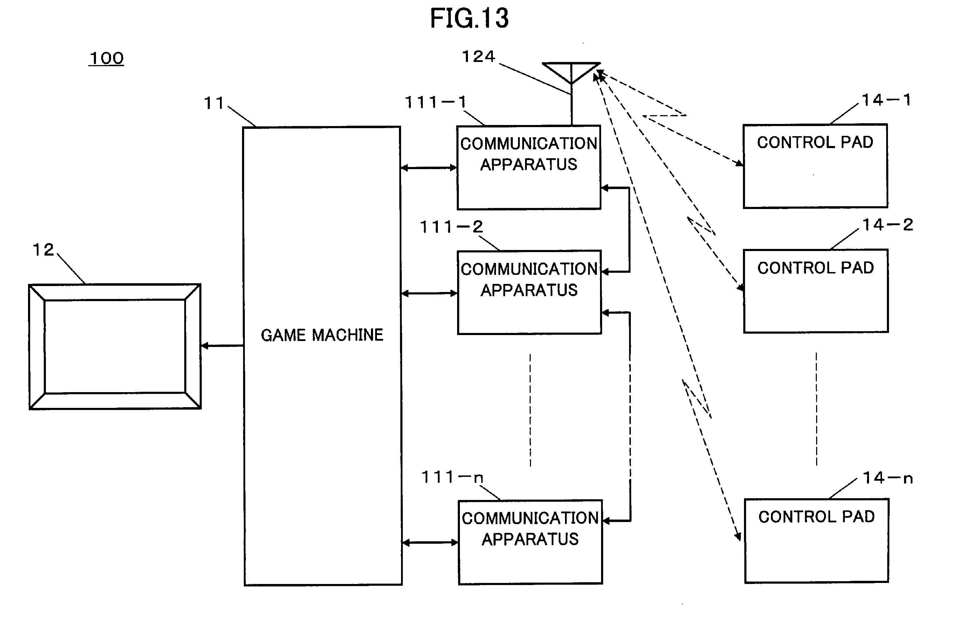

FIG. 13 is a system block diagram of a game system 100 according to a second embodiment of the present invention. In FIG. 13, those parts that are the same as those corresponding parts in FIG. 2 are designated by the same reference numerals, and a description thereof is omitted.

The game system 100 according to this embodiment includes communication apparatuses 111-1 through 111-n connected in a master-slave mode. The communication apparatus 111-1 is connected to the USB port P11 of the game machine 11 and serves as a master apparatus of the other communication apparatuses 111-2 through 111-n. The communication apparatuses 111-2 through 111-n are connected to the USB ports P12 through Pn, respectively, and serve as slave apparatuses.

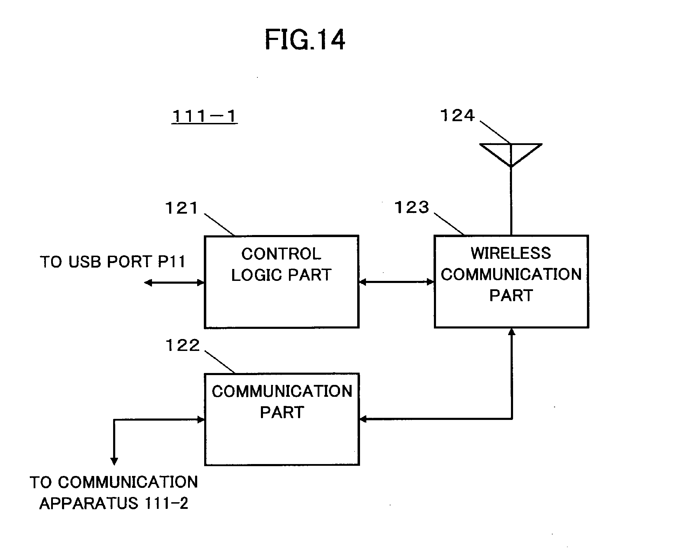

FIG. 14 is a block diagram of the communication apparatus 111-1, which is the master apparatus.

The communication apparatus 111-1 includes a control logic part 121 for controlling communication with the USB port P11 of the game machine 11, a communication part 122 that controls communication with the slave apparatuses 111-2 through 111-n, a wireless communication part 123 that performs communication with the control pads 14-1 through 14-n, and an antenna 124. The communication apparatus 111-1 controls communication with the USB port P11 of the game machine 11, controls communication with the communication apparatuses 111-2 through 111-n, which are the slave apparatuses, and performs wireless communications with the control pads 14-1 through 14-n.

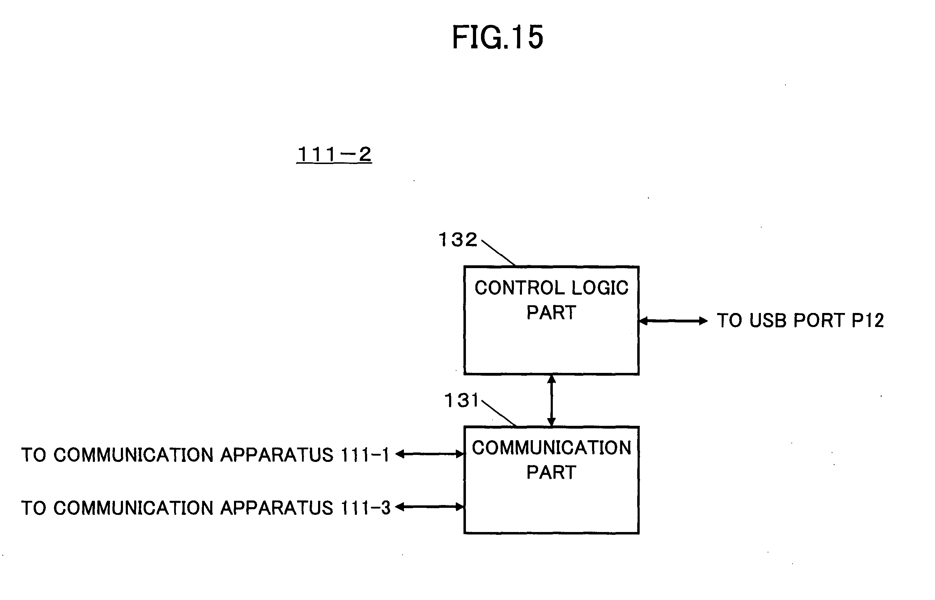

FIG. 15 is a block diagram of the communication apparatus 111-2, which is one of the slave apparatuses.

The communication apparatus 111-2 includes a communication part 131 for performing communications with the other communication apparatuses 111-1 and 111-3 through 111-n, and a control logic part 132 that controls communications with the corresponding USB port P12 of the game machine 11.

According to this embodiment, communications with the control pads 14-1 through 14-n are all performed by the communication apparatus 111-1, which is the master apparatus. For this reason, the communication apparatuses 111-2 through 111-n, which are the slave apparatuses, do not require the wireless communication part 123 that performs high frequency wireless communication.

It should be noted that the pairing process and the communication process are similar to those in the first embodiment and are carried out by the communication apparatus 111-1.

### (Third Embodiment)

The USB ports P11 through Pn of the game machine 11 may be connected to respective communication apparatuses, and the communication apparatuses may perform wireless communication with the control pads 14-1 through 14-n, respectively.

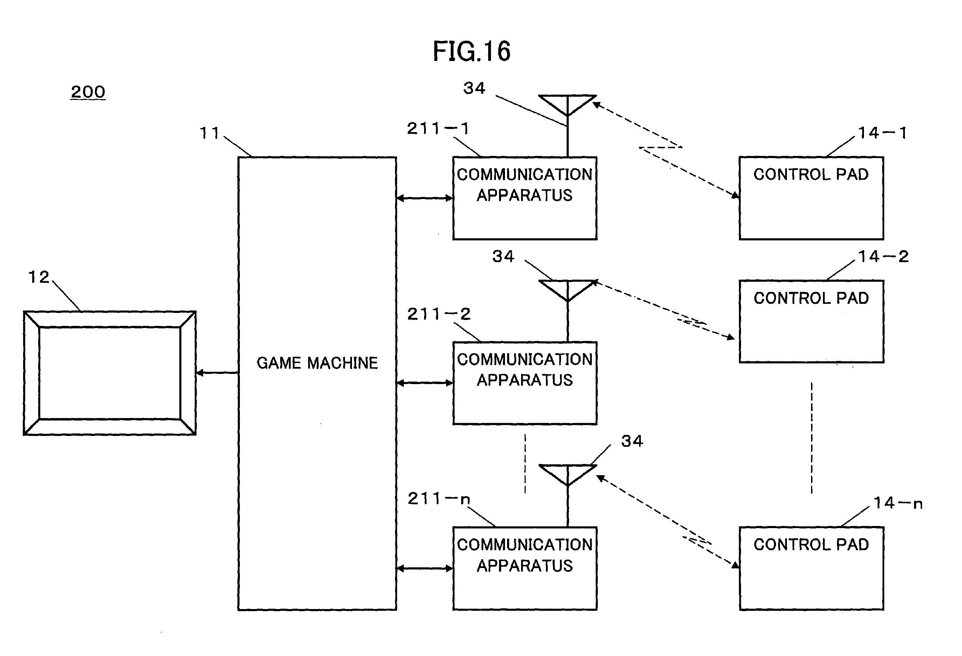

FIG. 16 is a system block diagram of a game system 200 according to a third embodiment of the present invention. In FIG. 16, those parts that are the same as those corresponding parts in FIG. 2 are designated by the same reference numerals, and a description thereof is omitted.

In the game system 200 according to this embodiment, communication apparatuses 211-1 through 211-n are connected to the respective USB ports P11 through Pn of the game machine 11. The communication apparatuses 211-1 through 211-n perform wireless communications with the control pads 14-1 through 14-n, respectively. That is, identification number IDs are set in advance to the communication apparatuses 211-1 through 211-n and the control pads 14-1 through 14-n such that one-to-one communications are performed. As in the communication process according to the first embodiment, each of the communication apparatuses 211-1 through 211-n and the control pads 14-1 through 14-n senses for the use condition of a communication channel at the time of communication, performs communication when the communication channel is not used, and when the communication channel is used, senses for the use condition of the communication channel again after waiting for a communication waiting time that is set for each of the communication apparatuses 211-1 through 211-n and the control pads 14-1 through 14-n.

In addition, in the above-mentioned first through third embodiments, the communication apparatuses 13, 111-1 through 111-n, and 211-1 through 211-n are provided separately from the game machine 11, but may be incorporated in the game machine 11.

As mentioned above, according to the present invention, multiple communication apparatuses have different waiting times. Hence, even if the communication apparatuses become competitive in communication, the timings of their next communications are shifted relative to each other. Thus, it is possible for the communication apparatuses to perform communications without competition and without waiting for a long time interval.

The present invention is not limited to the specifically disclosed embodiments, and variations and modifications may be made without departing from the scope of the present invention.

## Claims

1. A communication method of communicating with a plurality of communication apparatuses via a communication channel, said communication method **characterized by** comprising:
a first step of determining a communication condition of the communication channel;
a second step of, when said first step determines that the communication channel is being used, waiting for a predetermined waiting time and returning to said first step; and
a third step of, when said first step determines that the communication channel is not being used, performing communications via the communication channel,
wherein the communication apparatuses have different predetermined waiting times.

2. The communication method as claimed in claim 1,.wherein the first step detects a carrier frequency of the communication channel,
when the carrier frequency is detected, the first step determines that the communication channel is being used, and
when the carrier wave frequency is not detected, the first step determines that the communication channel is not being used.

3. The communication method as claimed in claim 1, wherein, when communication is successively performed by using the communication channel, subsequent communication is performed by returning to the first step after waiting for a predetermined communication period after performing communication in accordance with the third step.

4. The communication method as claimed in claim 1, wherein the communication channel is a wireless communication channel.

5. A communication apparatus that performs communications via a communication channel, said communication apparatus **characterized by** comprising:
a communication condition determination part that determines a communication condition of the communication channel; and
a communication controller that, when said communication condition determination part determines that the communication channel is being used, waits for a predetermined waiting time before performing communications, and when said communication condition determination part determines that the communication channel is not being used, performs communications by using the communication channel.

6. The communication apparatus as claimed in claim 5, wherein the communication condition determination part detects a carrier frequency of the communication channel,
when the carrier frequency is detected, the communication condition determination part determines that the communication channel is being used, and
when the carrier frequency is not detected, the communication condition determination part determines that the communication channel is not being used.

7. The communication apparatus as claimed in claim 5, wherein the predetermined waiting time is set such that each of a plurality of communication apparatuses has a different waiting time.

8. The communication apparatus as claimed in claim 5, wherein, when communications are successively performed by using the communication channel, the communication controller performs communications at predetermined communication periods.

9. A game system, **characterized by** comprising:
a game machine;
a plurality of game controllers controlling said game machine and performing two-way communications with said game machine; and
a communication apparatus that performs communications with said game machine and said game controllers,
said game controllers and said communication apparatus each comprising:
a communication condition determination part that determines a communication condition of a communication channel between said game controller and said communication apparatus; and
a communication controller that, when said communication condition determination part determines that the communication channel is being used, waits for a predetermined waiting time before performing communications, and when said communication condition determination part determines that the communication channel is not being used, performs communications by using the communication channel.

10. The game system as claimed in claim 9, wherein the communication condition determination part detects a carrier frequency on the communication channel,
when the carrier frequency is detected, the communication condition determination part determines that the communication channel is being used, and
when the carrier frequency is not detected, the communication condition determination part determines that the communication channel is not being used.

11. The game system as claimed in claim 9, wherein the predetermined waiting time is set such that the game controller and the communication apparatus have different waiting times.

12. The game system as claimed in claim 9, wherein, when communications are successively performed by using the communication channel, the communication controller performs communications at predetermined communication periods.

13. A game controller that performs two-way communications with a game machine, said game controller **characterized by** comprising:
a communication condition determination part that determines a communication condition of a communication channel; and
a communication controller that, when said communication condition determination part determines that the communication channel is being used, waits for a predetermined waiting time before performing communications, and when said communication condition determination part determines that the communication channel is not being used, performs communications by using the communication channel.

14. The game controller as claimed in claim 13, wherein the communication condition determination part detects a carrier frequency of the communication channel,
when the carrier frequency is detected, the communication condition determination part determines that the communication channel is being used, and
when the carrier frequency is not detected, the communication condition determination part determines that the communication channel is not being used.

15. The game controller as claimed in claim 13, wherein the predetermined waiting time is set such that each of a plurality of game controllers has a different waiting time.

16. The game controller as claimed in claim 13, wherein, when communications are successively performed by using the communication channel, the communication controller performs communications at predetermined communication periods.
